# EUROPEAN PATENT APPLICATION

(11) **EP 3 549 740 A1**
(43) Date of publication of application: **09.10.2019**
(21) Application number: 17876756.2
(22) Date of filing: 25.05.2017
(51) Int. Cl.: B29C 33/02, B29C 35/02, B29L 30/00

(54) **TIRE MOLD AND METHOD FOR MANUFACTURING TIRE MOLD**

(30) Priority: 29.11.2016 JP 2016231846
(71) Applicant: Bridgestone Corporation, Tokyo 104-8340 (JP)
(72) Inventor: MAEDA, Toshiyuki, Tokyo 104-8340 (JP)
(74) Representative: Oxley, Robin John George
(86) International application number: PCT/JP2017/019596
(87) International publication number: WO 2018/100769

(57) **Abstract**

Correction of the molding part of the tire mold can be facilitated, so that distortion of the molding part can be reduced.

The holding body (40) holds the molding part (30) on the mounting surface (44) where the molding part (30) is attached to. The plurality of bolts (5) attach the molding part (30) to the holding body (40) while pulling the molding part (30) towards the holding body (40) to correct a distortion of the molding part (30). The molding part (30) has the contacting surface (35) coming in contact with the mounting surface (44), the projection rows (37) each of which consists of the plurality of projections (36) arranged in the tire circumferential direction at intervals, and screw holes (38) each of which is formed in the projection (36). The holding body (40) has the concave parts (45) each of which houses the projection (36) of the molding part (30) and the insertion holes (46) each of which opens at the bottom surface of the concave part (45) and into which the screw part (5A) of the bolt (5) is inserted.

## Description

### BACKGROUND OF THE INVENTION

### Field of the Invention

The present invention relates to a tire mold for molding a tire and a method for manufacturing a tire mold in which a molding part of the tire mold is formed by laminate shaping.

### Related Background of the Invention

At a time of producing a tire, an un-vulcanized tire (green tire) is vulcanized by a tire vulcanizing apparatus, and thus the tire is produced. At that time, the tire vulcanizing apparatus houses a tire in a tire mold and then molds the tire by the tire mold. In addition, as the tire mold, a mold with a plurality of tread segments divided in the tire circumferential direction has been known (cf. patent document 1).

In the conventional mold described in the patent document 1, a plurality of tread segments for molding a tread pattern of the tire, which is referred to as a molding part herein, is annularly located around the tire. However, a distortion may be caused in the tread segment depending on a thickness of the tread segment, a method of forming of the tread segment and so forth. It is necessary to reduce distortion of the tread segment to suppress its influence on shape of the tire when distortion of the tread segment is large.

Whereas, in the conventional mold, it is not able to correct the tread segment, therefore, it is difficult to reduce distortion of the tread segment. In addition, for example, when the tread segment is formed by laminate shaping, since distortion of the tread segment tends to become large by repetition of heating, it is needed to surely correct distortion of the tread segment.

### Prior Art

### Patent Document

Patent Document 1: Japanese Patent Laid-Open No. 2013-103478

### SUMMARY OF THE INVENTION

### Problems to be Solved by Invention

The present invention is made in view of the above-described conventional problems and an object thereof is to facilitate to correct the molding part of the tire mold for reducing distortion of the molding part.

### Means for solving Problems

The present invention is a tire mold for molding a tire. The tire mold comprises a plurality of molding parts which are divided in the tire circumferential direction so as to mold a tire; holding bodies each of which has a mounting surface where the molding part is attached to, so as to hold the molding part; and a plurality of bolts which are attached to the holding body while pulling the molding part towards the holding body so as to correct distortion of the molding part. The molding part has a contacting surface which comes into contact with the mounting surface of the holding body; projection rows, each of which consists of a plurality of projections that project towards the holding body from the contacting surface and are arranged in the tire circumferential direction at intervals; and screw holes, each of which is formed in the projection and into which a screw part of the bolt is screwed. The holding body has concave parts each of which opens at the mounting surface for housing the projection of the molding part; and insertion holes, each of which opens at a bottom surface of the concave part so that the screw part of the bolt is inserted in.

In addition, the present invention is concerned with a method for manufacturing the tire mold, wherein the molding part of the tire mold of the present invention is formed by laminate shaping. The method for manufacturing a tire mold comprises a step of forming a plurality of projections of the projection row which are connected by connecting parts that are thinner than the projections, on the contacting surface of the molding part by laminate shaping; and a step of separating the plurality of projections of the projection row by cutting or removing the connecting parts between the projections.

### EFFECTS OF THE INVENTION

According to the present invention, correction of the molding part of the tire mold can be facilitated, so that distortion of the molding part can be reduced.

### BRIEF DESCRIPTION OF THE DRAWINGS

Fig. 1 is a sectional view illustrating a tire vulcanizing apparatus of the present embodiment;
Fig. 2 is a sectional view of split mold of the present embodiment;
Fig. 3 is a plan view of the molding part of the present embodiment;
Fig. 4 is a plan view of the holding body of the present embodiment;
Fig. 5A and 5B are views illustrating the projections of the present embodiment;
Fig. 6 is a plan view of the molding part formed by laminate shaping.

### DESCRIPTION OF THE PREFERRED EMBODIMENTS

An embodiment of a tire mold and a method for manufacturing a tire mold of the present invention will be described by referring to the attached drawings.

The tire mold of the present embodiment is a mold for a tire and manufactured by the method for manufacturing the tire mold of the present embodiment. The tire mold is provided in a tire vulcanizing apparatus and molds an un-vulcanized tire.

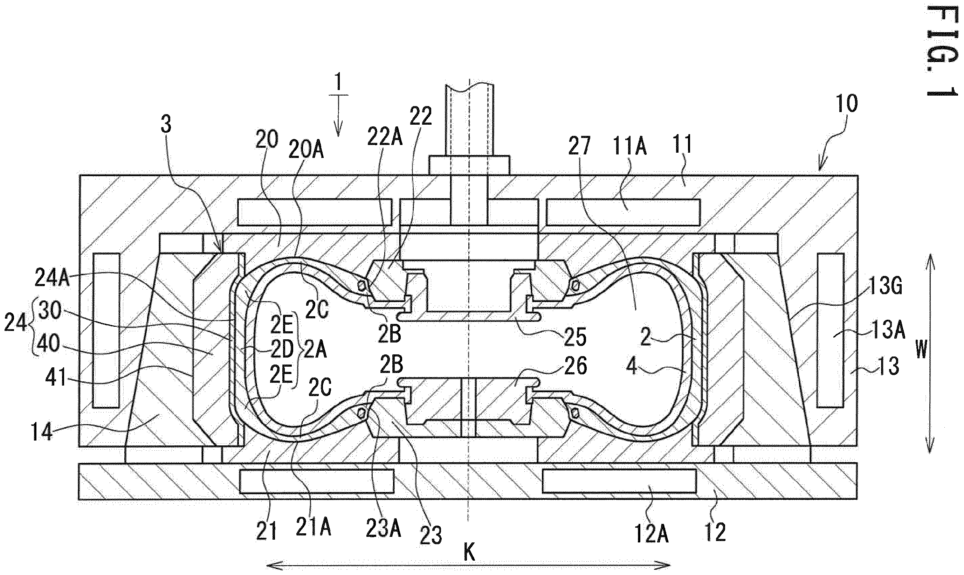

Fig. 1 is a sectional view illustrating a tire vulcanizing apparatus 1 of the present embodiment showing the tire vulcanizing apparatus 1 cut in a width direction of a tire 2 (tire width direction W) and the tire 2.

As illustrated, the tire 2 is an un-vulcanized tire and has a tread part 2A, a pair of bead parts 2B and a pair of side parts 2C. The tread part 2A is a part including an outer periphery of the tire 2 and is annularly formed along the circumferential direction of the tire 2 (tire circumferential direction). In addition, the tread part 2A is composed of a crown part 2D grounding a road surface and a pair of buttress parts (shoulder parts) 2E located on both outsides of the crown part 2D in the tire width direction W.

The pair of bead parts 2B is a part to be attached to a rim of the tire 2 and is located radially inside the tire 2 (tire radial direction K) with respect to the tread part 2A. The pair of side parts 2C is a part including the side of the tire 2 and is formed toward inside in the tire radial direction K from the both ends of the tread part 2A, which are located outside in the tire width direction W, In addition, The pair of side parts 2C is located between the both ends of the tread part 2A and the pair of bead parts 2B.

The tire vulcanizing apparatus 1 comprises an annular tire mold 3, an expandable bladder 4 and an opening and closing mechanism 10 to open and close the tire mold 3. The tire 2 is housed in the tire mold 3 such that the tire width direction W is matched with the vertical direction. The tire vulcanizing apparatus 1 heats the tire 2 in the tire mold 3 to vulcanize it and molds the tire 2 by the tire mold 3.

Here, for indicating directions relating to the tire vulcanizing apparatus 1 and the tire mold 3, directions relating to the tire 2 molded by the tire mold 3 are used. The directions about the tire 2 are the tire width direction W, the tire radial direction K and the tire circumferential direction. The directions relating to the tire vulcanizing apparatus 1 and the tire mold 3 are indicated based on each of the directions relating to the tire 2. In addition, the tire width direction W is matched with the width direction of the tire mold 3 (mold width direction), and the tire radial direction K is matched with the radial direction of the tire mold 3 (mold radial direction) . The tire circumferential direction is matched with the circumferential direction of the tire mold 3 (mold circumferential direction).

The tire mold 3 is an outer die for molding an outer surface of the tire 2, and comprises a pair of side molds 20, 21 (upper side mold 20, lower side mold 21) and a pair of bead molds 22, 23 (upper bead mold 22, lower bead mold 23) and a plurality of split molds 24. The pair of side molds 20, 21 are formed into a disc shape having an opening at its center, respectively and are located opposite each other. In addition, the pair of side molds 20, 21 have molding surfaces 20A, 21A which come into contact with the side parts 2C and the bead parts 2B of the tire 2, respectively and mold the side surfaces of the side parts 2C and the bead parts 2B by the molding surfaces 20A, 21A, respectively.

The pair of bead molds 22, 23 are formed into an annular shape and are located at the center parts of the pair of side molds 20, 21, respectively. In addition, the pair of bead molds 22, 23 have molding surfaces 22A, 23A which come into contact with the bead parts 2B of the tire 2, respectively and molds internal perimeter surfaces of the bead parts 2B by the molding surfaces 22A, 23A, respectively. The plurality of split molds 24 are a plurality of segment molds which are divided in the tire circumferential direction and are tread molds molding the tread part 2A of the tire 2.

The plurality of split molds 24 are located sequentially along the tire circumferential direction and are combined into an annular shape between the pair of side molds 20, 21. The plurality of split molds 24 surround the tread part 2A of the tire 2 while being combined into the annular shape. In addition, each of the plurality of split molds 24 has a molding surface 24A to be in contact with the tread part 2A of the tire 2 and molds the outer surface of the tread part 2A by the molding side 24A. A tread pattern is molded on the tread part 2A of the tire 2 by the plurality of split molds 24.

Tire vulcanizing apparatus 1 comprises a pair of clamp members 25, 26 (upper clamp member 25, lower clamp member 26) holding both ends of the bladder 4 and a supply device (not shown) to supply gas into the bladder 4. By the pair of clamp members 25, 26 and the pair of bead molds 22, 23, the openings of the pair of side molds 20, 21 are closed, respectively.

The bladder 4 is arranged in the tire 2 and is expanded by gas supplied from the supply device. At the time of molding of the tire 2 (at the time of vulcanization), the expanded bladder 4 comes into contact with the inner surface of the tire 2 and pressurize the tire 2. By the bladder 4, the tire 2 is pushed against the molding surfaces 20A - 24A of the tire mold 3. After molding of the tire 2, gas is exhausted from the bladder 4 and then the bladder 4 is contracted.

The opening and closing mechanism 10 has an upper plate 11, a lower plate 12, a cylindrical outer ring 13 formed on the upper plate 11 and a plurality of movable members 14. By a moving device (not shown), the upper plate 11 is vertically moved (in tire width direction W) above the lower plate 12 and thus the upper plate 11 and the lower plate 12 are approached to or separated from each other. The tire mold 3 is arranged between the upper plate 11 and the lower plate 12 and is connected to the upper plate 11 and the lower plate 12. Specifically, the upper side mold 20 is attached to the upper plate 11 and moves integrally with the upper plate 11. The lower side mold 21 is attached to the lower plate 12.

The outer ring 13 surrounds the tire mold 3 and the plurality of movable members 14 and is moved integrally with the upper plate 11. Each of the plurality of movable members 14 is movably connected to the inner peripheral part of the outer ring 13 (guide part 13G). With movement of the outer ring 13, the plurality of movable members 14 are guided by the guide part 13G of the outer ring 13 and thus are moved in the tire radial direction K. The plurality of split molds 24 are attached to the movable members 14, respectively and are moved integrally with the movable members 14 in the tire radial direction K. At the time of moving, the plurality of movable members 14 slide on the upper surface of the lower plate 12 and thus the plurality of movable members 14 and the split molds 24 are radially moved. In this way, the plurality of movable members 14 and the split molds 24 are approached to or separated from one another in the tire circumferential direction.

The opening and closing mechanism 10 makes the upper side mold 20 and the lower side mold 21 approach to or separate from each other by movement of the upper plate 11 and the outer ring 13 and makes the plurality of the spit molds 24 approach to or separate from one another. With this, the opening and closing mechanism 10 opens and closes the tire mold 3. When the tire mold 3 is opened, the upper side mold 20 and the lower side mold 21 are separated from each other and the plurality of the split molds 24 are separated from one another. When the tire mold 3 is closed, the upper side mold 20 and the lower side mold 21 are approached to each other. In addition, the plurality of the split molds 24 are approached to and contacted with one another. In this state, the plurality of split molds 24 are combined into an annular shape and are further combined with the upper side mold 20 and the lower side mold 21.

The upper plate 11, the lower plate 12 and the outer ring 13 are heating members for heating the tire mold 3 and have heating chambers 11A, 12A, 13A formed in the insides thereof, respectively. The heating chambers 11A, 12A, 13A are annular flow passages into which a heating medium is supplied from a supply device for supplying the heating medium. The tire vulcanizing apparatus 1 heats the upper plate 11, the lower plate 12 and the outer ring 13 by the heating medium and thus the tire mold 3 is heated by the upper plate 11, the lower plate 12 and the outer ring 13. With this, the tire mold 3 is heated to a molding temperature (vulcanization temperature) of the tire 2 and thus the tire 2 is heated to the molding temperature by the tire mold 3.

At the time of molding of the tire 2, the tire mold 3 is opened and the un-vulcanized tire 2 is arranged in the tire mold 3. Successively, the tire mold 3 is closed to house the tire 2 in an internal space 27 of the tire mold 3. In addition, the bladder 4 is arranged in the tire 2 and then the tire 2 is pressurized by the expanded bladder 4. In this state, the tire 2 is heated and thus the tire 2 is vulcanized and molded. The outer surface of the tire 2 is molded by the tire mold 3. After molding of the tire 2, the tire mold 3 is opened and the tire 2 after molding (after vulcanization) is taken out of the tire mold 3.

Each of the plurality of split molds 24 has a molding part 30 for molding the tire 2 and a holding body 40 for holding the molding part 30. The molding part 30 is a board-shaped surface layer part having a molding surface 24A, and molds at least the tread part 2A of the tire 2 by the molding surface 24A. At the time of molding of the tire 2, the molding parts 30 of the plurality of split molds 24 are located sequentially along the tire circumferential direction and are combined into an annular shape and surround the tire 2. Here, the molding part 30 is a pattern mold which molds a tread pattern on the tread part 2A of tire 2 and is formed thinner than the holding body 40.

The holding body 40 is a block base (base mold) and is located outside in the tire radial direction K with respect to the molding part 30. The molding part 30 is attached to the inside of the holding body 40 in the tire radial direction K, and the holding body 40 is attached to the inside of the movable member 14 in the tire radial direction K. The movable member 14 is connected to the holding body 40 while being in contact with a connecting surface 41 of the holding body 40. The molding surface 24A is a tire molding part (contact part) of the molding part 30. The molding part 30 molds the tire 2 by the molding surface 24A while being in contact with the tire 2.

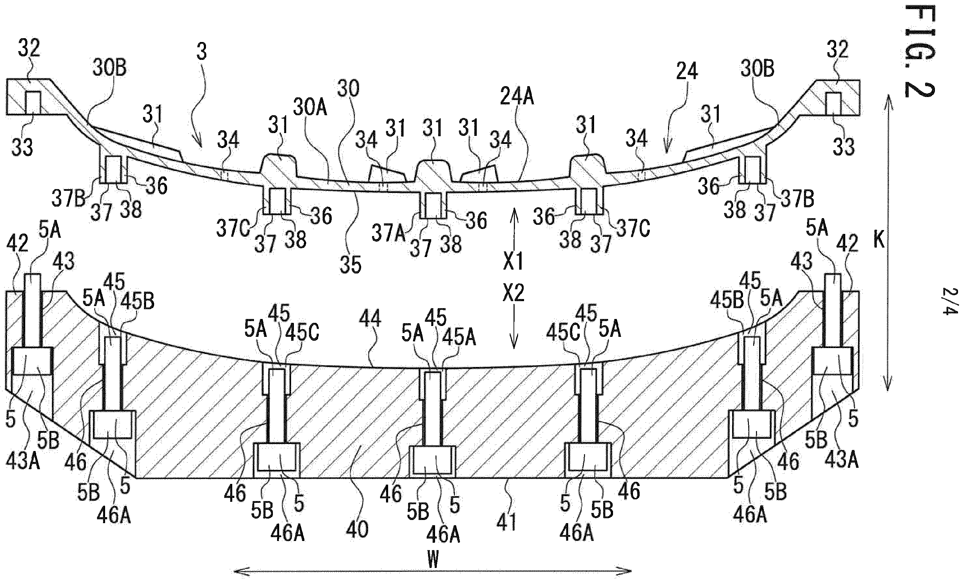

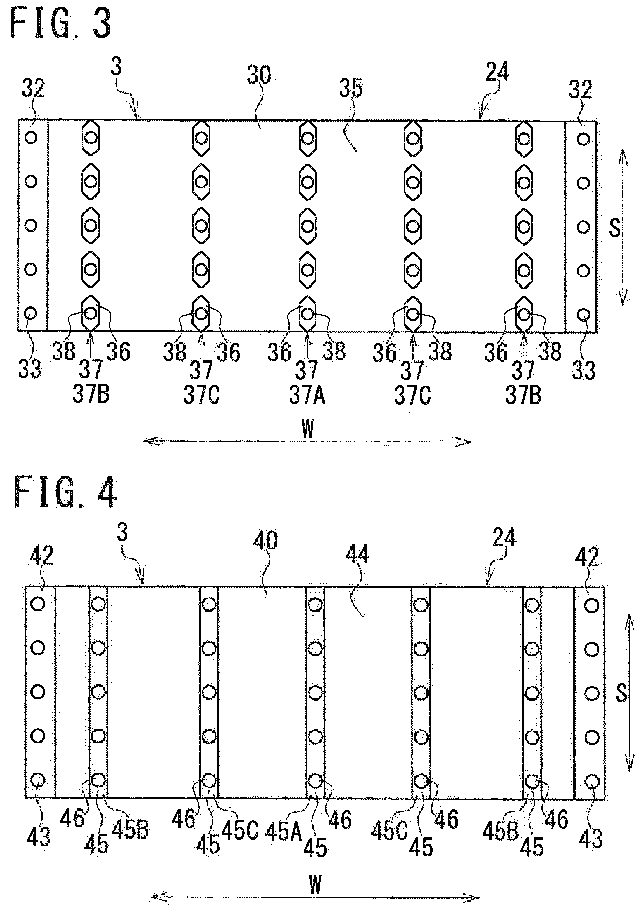

Fig. 2 is a sectional view of the split mold 24 of the present embodiment and shows the molding part 30 and the holding body 40 which are separated. Fig. 3 is a plan view of the molding part 30 of the present embodiment and shows the molding part 30 viewed from the arrow X1 in Fig. 2. Fig. 4 is a plan view of the holding body 40 of the present embodiment and shows the holding body 40 viewed from the arrow X2 in Fig. 2.

As illustrated, in the tire mold 3, the split mold 24 comprises the molding parts 30 divided in the tire circumferential direction S, the holding body 40 thicker than molding part 30 and a plurality of bolts 5 which are fastening means. The molding part 30 is detachably attached to the holding body 40 by the plurality of bolts 5. At that time, the molding part 30 can be deformed by screwing the plurality of bolts 5.

The molding part 30 has a crown molding part 30A which molds the crown part 2D of the tire 2 corresponding to an outer shape of the tire 2 and a pair of buttress molding parts 30B which molds the pair of buttress parts 2E of the tire 2. The crown molding part 30A is formed along the tire width direction W and to contact with the crown part 2D. The pair of buttress molding parts 30B are connected to the both ends of the crown molding part 30A, which are located the outside in the tire width direction W, and they are to contact with the pair of buttress parts 2E. The buttress molding parts 30B are inwardly inclined in the tire radial direction K with respect to the tire width direction W, when viewed from the inside to the outside in the tire width direction W.

The molding part 30 has a plurality of convex parts 31 formed on the molding surface 24A, a pair of edge parts 32, a plurality of screw holes 33 formed in the edge part 32, a plurality of vent holes 34 (omitted in Fig. 3), a contacting surface 35 which come into contact with the holding body 40, a plurality of projections 36 arranged in the tire circumferential direction S, at least one projection row 37 consisting of the plurality of projections 36 and a screw hole 38 formed in the projections 36. The molding surface 24A is an inner peripheral surface of the molding part 30 located inside in the tire radial direction K, and the contacting surface 35 is an outer peripheral surface of the molding part 30 located outside in the tire radial direction K. By the plurality of convex parts 31 of the molding surface 24A, concave portions (e.g., grooves, sipes) are molded on the tread part 2A of the tire 2.

The pair of edge parts are outer parts of the molding part 30 in the tire width direction W, and projects outward in the tire width direction W. Each of the plurality of screw holes 33 is a female screw part on which a female screw is formed, and is formed in the edge part 32, at intervals in the tire circumferential direction S. A screw part 5A of the bolt 5 is the male screw part on which a male screw is formed. The screw parts 5A of the bolt 5 are screwed into the screw holes 33, respectively so that the pair of edges 32 are attached to the holding body 40 by the plurality of bolts 5. Each of the plurality of vent holes 34 is a through-hole (vent part) for exhausting gas (air) opening to the molding surface 24A of the molding part 30 and penetrates the molding part 30. At the time of molding the tire 2, gas between the tire 2 and the molding part 30 is exhausted outside the tire mold 3 by the plurality of the vent holes 34.

The plurality of projections 36 are projected from the contacting surface 35 of the molding part 30 towards the holding body 40 and arranged in the projection rows 37 at intervals in the tire circumferential direction S. The projection 36 is a columnar projection outwardly projecting in the tire radial direction K and is formed into a hexagon shape viewed from the outside in tire radial direction K. Therefore, thepluralityof projections 36 are each formed into hexagonal column shape and are arranged sequentially along the tire circumferential direction S. In addition, the plurality of projections 36 are separated one another in the tire circumferential direction S and are formed at predetermined intervals.

The screw hole 38 is a female screw part which is formed in the projection 36 and is formed along the tire radial direction K and opens at the distal end surface of the projection 36 in its projecting direction. One screw hole 38 is formed in one projection 36, and the screw part 5A of the bolt 5 is screwed into the screw hole 38. In addition, the screw hole 38 is a blind hole closed in each projection 36 and is formed only within each projection 36. The molding part 30 has vent holes 34 (omitted in Fig. 2) each of which penetrates the projection 36. The screw hole 38 and the vent hole 34 are formed in the projection 36 by being shifted from each other. Therefore, the internal spaces of the vent hole 34 and the screw hole 38 are not communicated with each other. The screw hole 38 and the vent hole 34 are formed in the projection 36 without intersecting with each other.

The projection row 37 is formed at least in the central part of the molding part 30 in the tire width direction W corresponding to the central part of the tire 2 in the tire width direction W. Here, the molding part 30 has the plurality of projection rows 37 formed at intervals in the tire width direction W. Each of the plurality of projection rows 37 has an odd number of projections 36. In addition, the plurality of projection rows 37 are five projection rows 37A - 37C formed in parallel (one center projection row 37A, two outer projection rows 37B and two middle projection rows 37C). The center projection row 37A is located in the central part of the molding part 30 in the tire width direction W. The two outer projection rows 37B are located on the outermost sides among the plurality of projection rows 37 in the tire width direction W and are formed on a boundary area between the crown molding part 30A and the buttress molding parts 30B, respectively. The two middle projection rows 37C are located between the center projection row 37A and the outer projection rows 37B and are formed in intermediate areas between the central part and the edge parts 32 of the molding part 30, respectively. In each projection rows 37, the plurality of projections 36 are formed at equal intervals in the tire circumferential direction S.

The holding body 40 has a connecting surface 41 to be connected to the movable member 14, a pair of edge parts 42, a plurality of insertion holes 43 formed in the edge parts 42, a mounting surface 44 opposed to the contacting surface 35 of the molding part 30, a plurality of concave parts 45 formed in the mounting surface 44 and a plurality of insertion holes 46 connected to the concave parts 45. The connecting surface 41 is an outer peripheral surface of the holding body 40 located outside in the tire radial direction K, and the mounting surface 44 is an inner peripheral surface of the holding body 40 located inside in the tire radial direction K. The pair of edge parts 42 are outside parts of the holding body 40 in the tire width direction W.

The plurality of insertion holes 43 are formed in the edge part 42 at intervals in the tire circumferential direction S and penetrate the edge part 42. The screw parts 5A of the plurality of bolts 5 are inserted into the insertion holes 43 and are screwed into the screw holes 33 of the edge parts 32. By the plurality of bolts 5, the pair of edge parts 32 of the molding part 30 are attached to the pair of edge parts 42 of the holding body 40. A head 5B of the bolt 5 is housed in a countersink hole 43A of the insertion hole 43 opening at the connecting surface 41 so that it comes into contact with a bottom surface of the countersink hole 43A.

The mounting surface 44 of the holding body 40 is formed into a shape corresponding to the contacting surface 35 of the molding part 30. The contacting surface 35 is arranged to overlap on the mounting surface 44 and to come into contact with the mounting surface 44. The molding part 30 is attached to the mounting surface 44, and thus holding body 40 holds the molding part 30 on the mounting surface 44. The concave part 45 is a housing part for housing the projection 36 of the molding part 30 and is formed toward outside from the mounting surface 44 in the tire radial direction K. In addition, the concave part 45 is a groove (housing groove) formed along the tire circumferential direction S and opens at the mounting surface 44. A bottom surface of the concave part 45 is located in the holding body 40. The projection 36 is positioned by the concave part 45 and is arranged at the predetermined position in the tire width direction W.

The plurality of the concave parts 45 are formed at intervals in the tire width direction W corresponding to the plurality of projection rows 37 and house the plurality of projections 36 of the projection rows 37 respectively. Here, the plurality of concave parts 45 are five concave parts 45A - 45C formed in parallel (one center concave part 45A, two outer concave parts 45B and two middle concave parts 45C) . The center concave part 45A is located in the central part of the holding member 40 in the tire width direction W corresponding to the central part of the tire 2 in the tire width direction W. The two outer concave parts 45B are located on the outermost sides among the plurality of concave parts 45 in the tire width direction W and are formed between the center concave part 45A and edge parts 42, respectively. The two middle concave parts 45C are located between the center concave part 45A and the outer concave parts 45B and are formed in intermediate areas between the central part and the edge parts 42 of the holding body 40, respectively. The plurality of projections 36 of the center projection row 37A are housed in the center concave part 45A, and the plurality of projections 36 of the outer projection rows 37B are housed in the outer concave parts 45B respectively. The plurality of projections 36 of the middle projection rows 37C are housed in the middle concave parts 45C respectively.

The plurality of insertion holes 46 are formed, corresponding to the plurality of projections 36 of the projection row 37, in the concave part 45, at intervals in the tire circumferential direction S, and are located sequentially along the tire circumferential direction S. The insertion hole 46 are through-holes formed along the tire radial direction K, and open at the connecting surface 41 and the bottom surface of the concave part 45. When the projection 36 is housed in the concave part 45, the screw hole 38 of the projection 36 is located inside in the tire radial direction K with respect to the insertion hole 46. Each screw part 5A of the bolts 5 is inserted in the insertion hole 46 from the outside thereof in the tire radial direction K and is screwed into the screw hole 38 of the projection 36. The head 5B of the bolt 5 is housed in the countersink hole 46A of the insertion hole 46 opening at the connecting surface 41 and comes into contact with a bottom surface of the countersink hole 46A.

The plurality of insertion holes 46 are formed in the concave parts 45 such that they are separated one another at equal intervals in the tire circumferential direction S. The bolt 5 is screwed into the screw hole 38 of the projection 36 housed in the concave part 45, while being inserted in the insertion hole 46. The plurality of bolts 5 attaches the molding part 30 to the holding body 40 while pulling the molding part 30 towards the holding body 40. The depth of the concave part 45 is deeper than the height (projecting length) of the projection 36, so that a gap is formed between the distal end surface of the projection 36 and the bottom surface of the concave part 45. By the plurality of bolts 5, each projection 36 in the concave part 45 is pulled towards the bottom surface of the concave part 45, so that the contacting surface 35 of the molding part 30 is pulled towards the mounting surface 44 of the holding body 40.

When a distortion is caused in the molding part 30, the molding part 30 is deformed by pulling the plurality of bolts 5, so that the contacting surface 35 of the molding part 30 comes into contact with the mounting surface 44 of the holding body 40. The plurality of projections 36 are pulled at positions of the plurality of projection rows 37, so that the molding part 30 is deformed corresponding to the shape of the mounting surface 44. The plurality of bolts 5 deform the molding part 30 so that distortion of the molding part 30 is corrected. In this state, the contacting surface 35 of the molding part 30 is brought into close contact with the mounting surface 44 of the holding body 40 and is attached to the mounting surface 44. In addition, in the concave part 45, the distal end surface of the projection 36 is located inside in the tire radial direction K with respect to the bottom surface of the concave part 45, so that it is located away from the bottom surface of the concave part 45.

A difference between the shape of the molding part 30 and a predetermined reference shape may be generated by the distortion of the molding part 30 depending on a method of forming of the molding part 30 or possible deformation of the molding part 30 associated with use and so forth. When the molding part 30 is attached to the holding body 40, the projections 36 of the plurality of projection rows 37 are pulled in a predetermined order by the bolts 5 in response to distortion of the molding part 30. For example, after the plurality of projections 36 of the center projection row 37A are pulled by the bolts 5, the plurality of projections 36 of the other projection rows 37B, 37C are pulled by the bolts 5. In contrast, the plurality of bolts 5 may be gradually screwed into the projections 36 of the plurality of projection rows 37. In this case, all of the projections 36 are gradually pulled by the bolts 5.

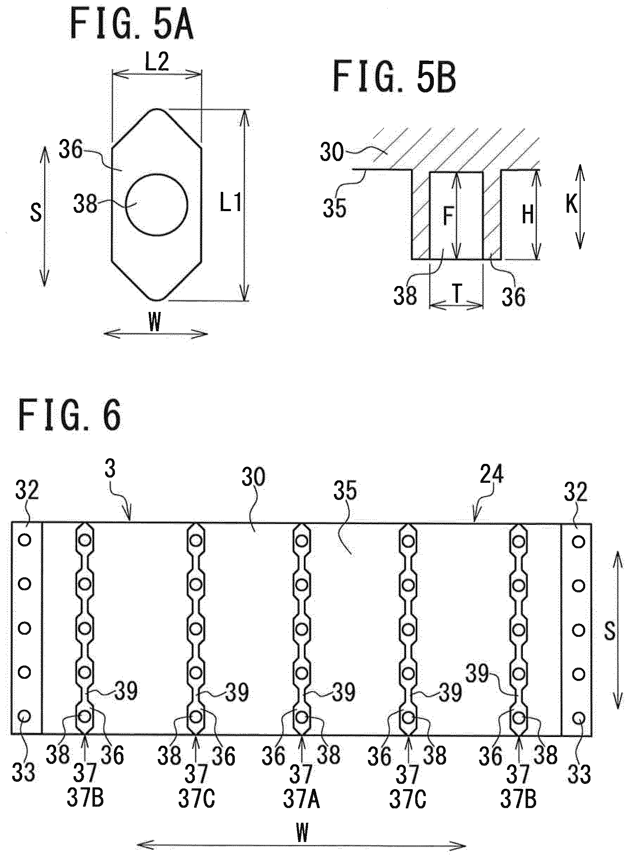

Figs. 5 are views illustrating the projection 36 of the present embodiment and shows one projection 36 schematically. Fig. 5A is a plan view of the projection 36 corresponding to Fig. 3, and Fig. 5B is a sectional view of the projection 36 corresponding to Fig. 2.

As illustrated, in each of the projections 36, a size in the tire circumferential direction S of the projection 36 is L1 and a size in the tire width direction W of the projection 36 is L2 (cf. Fig. 5A) . In this case, the size L1 in the tire circumferential direction S of the projection 36 is not less than the size L2 in the tire width direction W of the projection 36 (L1 ≥ L2).

In each of the projections 36, a height of the projection 36 is H, a depth of the screw hole 38 is F and a diameter of the screw hole 38 is T (cf. Fig. 5B). The depth F of the screw hole 38 is not more than the height H of the projection 36 (F ≤ H). Therefore, the screw hole 38 is not formed at a position to the molding surface 24A side than the contacting surface 35 of the molding part 30 but formed only in the projection 36. Whereas, when the depth F of the screw hole 38 exceeds the height H of the projection 36 (F > H), the screw hole 38 are formed to the outside of the projection 36. As a result, the screw hole 38 is formed at a position to the molding surface 24A side than the contacting surface 35 of the molding part 30, and the thickness of the molding part 30 becomes thinner partially at the position of the screw hole 38. When the depth F of the screw hole 38 and the height H of the projection 36 fulfill a requirement of (F ≤ H), the thickness of the molding part 30 is prevented from becoming thinner partially, so that the thickness and the strength of the molding part 30 are ensured.

At the time of collecting distortion of the molding part 30 by the bolts 5, it is necessary to screw the bolt 5 into the screw hole 38 to a depth not less than the diameter of the bolt 5 (diameter T of the screw hole 38). Therefore, the depth F of the screw hole 38 is not less than the diameter T of the screw hole 38 (F ≥ T). For example, when the bolt 5 is a bolt of M6 (diameter: 6mm), the depth F of the screw hole 38 is not less than 6mm, and the bolt 5 is screwed into the screw hole 38 to the depth not less than 6mm. In addition, the height H of the projection 36 is not less than the diameter T of the screw hole 38 (H ≥ T).

The holding body 40 and the molding part 30 are made of metal (e.g., aluminum alloy, steel, stainless steel), and formed by a processing (e.g., machine processing, casting, laminate shaping). Here, the holding body 40 is formed by machine processing. In addition, the whole of the molding part 30 is formed by laminate shaping, namely the molding part 30 is formed by laminate shaping. Therefore, the molding part 30 is a laminated body (laminated molding article) of the hardened layers consisting of forming material and is formed by a laminate shaping device (e.g., three-dimensional printer (3D printer)). At the time of forming the molding part 30, laminated shape data of the molding part 30 divided in the plurality of layers is prepared based on shape data of the molding part 30. Based on the laminated shape data, each of the hardened layers is formed and the plurality of hardened layers are laminated sequentially. In this way, the laminated body is formed and thus the molding part 30 of the tire mold 3 is formed.

The depth F of the screw hole 38 is not more than the height H of the projection 36 (F ≤ H), and thus the screw hole 38 is formed only in the projection 36. Therefore, the shape data of the projection 36 of the molding part 30 and the shape data of other than the projection 36 can be individually prepared when the shape data of the molding part 30 is prepared. By uniting such individually prepared shape data, a preparing efficiency of the shape data of the molding part 30 is improved. In addition, for example, when the bolt 5 is the bolt of M6, the female thread of the screw hole 38 is formed to the depth not less than 6mm by laminate shaping.

For example, by powder laminate shaping using the metal powder, the molding part 30 which is a powder sintered body is formed. Specifically, a powder layer of predetermined thickness is formed and the powder layer is irradiated with a light beam (e.g., a laser beam) so that the powder is sintered by means of heat of the light beam. In this way, the hardened layer (sintered layer) in which the powder is sintered is formed. In addition, the formation of the powder layer and the formation of the hardened layer are repeated and the plurality of the hardened layers are sequentially laminated, so that the molding part 30 is formed into a predetermined shape. In this way, the powder hardened layers are laminated and thus the molding part 30 which is a laminate body of the plurality of hardened layer is formed.

Fig. 6 is a plan view of the molding part 30 formed by the laminate shaping and shows the molding part 30 like Fig. 3.

As illustrated, the plurality of projections 36 of the projection row 37 which are connected by connecting part 39 are formed on the contacting surface 35 of the molding part 30 by laminate shaping. The connecting part 39 is a plate-like connection projection projecting from the contacting surface 35 and is formed to the same height as the projections 36. The size (thickness) in the tire width direction W of the connecting part 39 is smaller than the size L2 in the tire width direction W of the projection 36, and the connecting part 39 is formed thinner (finer) than the projection 36.

By taking a configuration of connecting the plurality of projections 36 through the connecting parts 39, the plurality of projections 36 can be easily formed. An increase in volume of the molding part 30 is suppressed by forming the connecting part 39 thinner than the projection 36. During the laminate shaping, heat is easily escaped from the connecting parts 39, and thus heat is dissipated from the connecting parts 39.

The connecting part 39 is formed between adjacent projections 36 in the tire circumferential direction S and connects the projections 36. In the projection row 37, the projections 36 and the connecting parts 39 are alternatively formed along the tire circumferential direction S. After forming the molding part 30 by the laminate shaping, the connecting part 39 between the projections 36 is cut or eliminated. For example, the connecting part 39 is cut between the projections 36 by a grinder, or the connecting part 39 is removed from between the projections 36 by machine processing. In this way, the plurality of projections 36 of the projection row 37 are separated, so that the plurality of projections 36 separated each other are formed to be in the projection row 37. When the connecting part 39 is cut, a part of connecting part 39 may be left on the projection 36.

In the tire mold 3 described above, the plurality of projections 36 are arranged at intervals in the tire circumferential direction S. Therefore, rigidity of the molding part 30 is suppressed to be increased, so that the molding part 30 is easily deformable. With this, correction of the molding part 30 is easily performed, so that distortion of the molding part 30 can be reduced. In addition, the contacting surface 35 of the molding part 30 surely comes into contact with the mounting surface 44 of the holding body 40. As a result, the heat can be surely transmitted from the holding body 40 to the molding part 30, so that the heat-transfer performance of the tire mold 3 can be improved. By the plurality of projections 36 of the projection rows 37, the molding part 30 can be tightly attached to the holding body 40.

Even when the molding part 30 is formed by laminate shaping, distortion of the molding part 30 can be surely corrected. Increases in forming materials and forming time when the molding part 30 is formed can be suppressed, so that the cost of the molding part 30 can be reduced. By taking the configuration of connecting the plurality of projections 36 through the connecting parts 39, each projection 36 does not stand alone, the plurality of projections 36 and the connecting parts 39 are formed as a continued rib-formed convex portion. Therefore, the plurality of projections 36 can be easily formed, and thus the plurality of projections 36 are smoothly formed by laminate shaping. At the time of laminate shaping, the heat associated with the laminate shaping is effectively dissipated by the connecting parts 39 that are thinner than the projections 36, so that a rise in temperature of the molding part 30 can be suppressed.

By virtue of the plurality of projections rows 37, the molding part 30 can be exactly corrected. Because the size L1 in the tire circumferential direction S is not less than the size L2 in the tire width direction W, in each of projections 36, the width of the concave part 45 is suppressed to become wide, so that the area of the mounting surface 44 can be made large. In this way, the contact area between the contacting surface 35 and the mounting surface 44 can be ensured, so that the heat transfer performance of the tire mold 3 can be more improved. Even if a part of connection part 39 is left on the projection 36, since the connecting part 39 is thinner than the projection 36, the concave part 45 is not necessary to be made wide, and the contact area between the contacting surface 35 and the mounting surface 44 is ensured.

Because the height H of the projection 36 is not less than the diameter T of the screw hole 38, the projection 36 can be surely pulled by the bolt 5. When the vent hole 34 and the screw hole 38 of the molding part 30 are formed by being shifted from each other, a rubber of the tire 2 does not enter the screw hole 38 from the vent hole 34. As a result, the rubber can be smoothly pulled out of the vent hole 34, so that a clogging of the vent hole 34 can be suppressed.

Note that, a shape of the projection 36 viewed from the outside thereof in the tire radial direction K may be a shape other than the hexagon shape (e.g., a circle shape, an elliptical shape, a triangle shape, a square shape, various kinds of polygon shapes). Therefore, for example, the projection 36 may be formed in various kinds of prism shapes (triangular prism shape, quadratic prism shape) or a column shape. In addition, the plurality of projections 36 in one projection row 37 may be formed in the same shape and may be formed in different shape. Depending on distortion of the molding part 30, only one projection row 37 may be formed on the molding part 30. In contrast, more than one projection rows 37 may be formed on the molding part 30. The concave part 45 is formed in the holding body 40 corresponding to the projection row 37 of the molding part 30.

The concave part 45 of the holding body 40 is not limited to the groove, the concave part capable of housing the projections 36 will do. For example, plurality of concave parts may be formed at intervals in the tire circumferential direction S, as well as the plurality of projections 36 of the projection row 37. The molding part 30 may be formed by a processing (e.g., casting, machine processing) other than the laminate shaping. The tire to be molded by the tire mold 3 may be a retreaded tire.

### Reference Signs List

- 1: tire vulcanizing apparatus
- 2: tire
- 3: tire mold
- 4: bladder
- 5: bolt
- 10: opening and closing mechanism
- 11: upper plate
- 12: lower plate
- 13: outer ring
- 14: movable member
- 20: upper side mold
- 21: lower side mold
- 22: upper bead mold
- 23: lower bead mold
- 24: split mold
- 25: upper clamp member
- 26: lower clamp member
- 27: internal space
- 30: molding part
- 31: convex part
- 32: edge part
- 33: screw hole
- 34: vent hole
- 35: contacting surface
- 36: projection
- 37: projection row
- 38: screw hole
- 39: contacting part
- 40: holding body
- 41: connecting surface
- 42: edge part
- 43: insertion hole
- 44: mounting surface
- 45: concave part
- 46: insertion hole

## Claims

1. A tire mold for molding a tire, the tire mold comprises; a plurality of molding parts which are divided in the tire circumferential direction so as to mold a tire; holding bodies each of which has a mounting surface where the molding part is attached to, so as to hold the molding part; and a plurality of bolts which are attached to the holding body while pulling the molding part towards the holding body so as to correct distortion of the molding part; wherein
the molding part has a contacting surface which comes into contact with the mounting surface of the holding body; projection rows each of which consists of a plurality of projections that project towards the holding body from the contacting surface and are arranged in the tire circumferential direction at intervals; and screw holes each of which is formed in the projection and into which a screw part of the bolt is screwed; and
the holding body has concave parts each of which opens at the mounting surface for housing the projection of the molding part; and insertion holes each of which opens at a bottom surface of the concave part so that the screw part of the bolt is inserted in.

2. The tire mold as set forth in claim 1, wherein
the molding part has the plurality of projection rows formed at intervals in the tire width direction.

3. The tire mold as set forth in claim 1 or 2, wherein
the molding part has vent holes each of which penetrates the projection, and
the screw hole and the vent hole are formed by being shifted from each other.

4. The tire mold as set forth in any one of claims 1 to 3, wherein
the size in the tire circumferential direction of the projection is not less than the size in the tire width direction of the projection.

5. The tire mold as set forth in any one of claims 1 to 4, wherein
the height of the projection is not less than the diameter of the screw hole.

6. The method for manufacturing a tire mold to form the molding part of the tire mold as set forth in any one of claims 1 to 5 by laminate shaping;
the method comprises steps of; forming a plurality of projections of the projection row which are connected by connecting parts that are thinner than the projections, on the contacting surface of the molding part by laminate shaping; and
separating the plurality of projections of the projection row by cutting or removing the connecting parts between the projections.
